# EUROPÄISCHE PATENTSCHRIFT

(11) **EP 1 053 851 B1**
(45) Veröffentlichungstag und Bekanntmachung des Hinweises auf die Patenterteilung: **12.02.2003**
(21) Anmeldenummer: 00109466.3
(22) Anmeldetag: 04.05.2000
(51) Int. Cl.: B29C 45/26, B29C 45/16

(54) **Werkzeug zum Kunststoff-Spritzgiessen von ein Gewinde, insbesondere ein Innengewinde aufweisenden Formteilen**
Mould for injection moulding plastic parts with a thread, in particular an internal thread
Moule pour mouler par injection des pièces en matière plastique comportant un filetage, notamment un filetage interne

(30) Priorität: 08.05.1999 DE 29908301 U
(43) Veröffentlichungstag der Anmeldung: 22.11.2000
(73) Patentinhaber: Braun Formenbau GmbH, 79353 Bahlingen (DE)
(72) Erfinder: Bühler, Klaus, 79353 Bahlingen (DE)
(74) Vertreter: Goy, Wolfgang, Dipl.-Phys.

(56) Entgegenhaltungen:
- CH-A- 379 757
- DE-A- 2 063 850
- US-A- 2 799 049
- PATENT ABSTRACTS OF JAPAN vol. 1997, no. 2, 28. Februar 1997 (1997-02-28) -& JP 08 258095 A (MITSUBISHI MATERIALS CORP), 8. Oktober 1996 (1996-10-08)
- PATENT ABSTRACTS OF JAPAN vol. 16, no. 306 (M-1276), 6. Juli 1992 (1992-07-06) -& JP 04 086231 A (OLYMPUS OPTICAL CO LTD), 18. März 1992 (1992-03-18)
- M. MÜLLER: "Vierfach-Abspindel-Werkzeug mit Zahnstangen" KUNSTSTOFFE,DE,CARL HANSER VERLAG. MUNCHEN, Bd. 66, Nr. 4, 1976, Seite 201 XP002097429 ISSN: 0023-5563

## Beschreibung

Die Erfindung betrifft ein Werkzeug zum Mehrkomponenten-Kunststoff-Spritzgießen, insbesondere Zweikomponenten-Spritzgießen, von ein Gewinde, insbesondere Innengewinde, aufweisenden Formteilen.

Das erfindungsgemäße Werkzeug dient insbesondere zum Spritzgießen von Formteilen, welche ein Innengewinde aufweisen. Selbstverständlich ist es auch denkbar, daß das Formteil ein Außengewinde aufweist, welches mittels des erfindungsgemäßen Werkzeugs gespritzt werden kann, obwohl das Spritzen von derartigen Außengewinden mittels des erfindungsgemäßen Werkzeugs nur von untergeordneter Bedeutung ist.

Kunststoffteile, welche miteinander verschraubt werden, weisen ein Gewinde samt zugehörigem Gegengewinde auf. Beispielsweise kann bei Kunststoff-Kugelschreibern auf die vordere Kugelschreiberhülse das Kugelschreiberhinterteil mit der Druckmechanik aufgeschraubt werden. Das Spritzen derartiger Kugelschreiberhülsen ist das besondere Anwendungsgebiet der Erfindung, jedoch nicht darauf beschränkt. Insbesondere geht es bei der Erfindung um das Mehrkomponentenspritzgießen derartiger Kunststofformteile, insbesondere um das 2-Komponentenspritzgießen, und ganz speziell um das Ausdrehen eines Gewindekerns im Wendesystem.

Derartige Werkzeuge zum Kunststoffspritzgießen von ein Gewinde aufweisenden Formteilen weisen einen Gewindekem des Werkzeugs auf, mittels welchem das Kunststoffgewinde des Formteils gespritzt werden kann. Bei diesem Gewindekern kann es sich entweder um ein Außengewinde oder aber bevorzugt um ein Innengewinde handeln. Bisher ist noch keine Möglichkeit in der Schaffung eines Werkzeugs gefunden worden, um derartige, ein Gewinde aufweisende Kunststofformteile mit mehreren, insbesondere mit zwei Komponenten vollautomatisch spritzen zu können.

Die Patent Abstracts of Japan vol. 1997, no. 2, 28. Februar 1997 & JP 08 258 095 A zeigt ein Werkzeug zum Spritzen von Verschlußkappen mit einem Innengewinde. Das Werkzeug weist zwei öffenbare Werkzeughälften auf, zwischen denen zum Spritzen des Formteils ein Formenhohlraum ausgebildet ist. Ein Rotationskern, welcher das Innengewinde der Verschlußkappe bildet, ragt in den Formenhohlraum hinein. Der Rotationskem kann mittels einer Zahnstange um seine Längsachse in eine Drehbewegung versetzt und somit aus der Verschlußkappe herausgedreht werden. - Dieses Werkzeug ist nur zum 1-Komponenten-Spritzgießen ausgelegt.

Die CH 379 757 A zeigt ein Verfahren zur Herstellung von Kunststoffhülsen. Auch hier wird der Kern der Hülse durch eine drehbar gelagerte Welle gebildet, die an ihrem vorderen Ende mit einer zur Bildung des Innengewindes der Hülse dienenden Außengewinde versehen ist. Zum Herausschrauben der Welle bzw. des Außengewindes aus der Hülse dient eine Zahnstange, welche mit einem auf der Welle sitzenden Zahnrad kämmt. - Auch dieses Werkzeug ist nur zum 1-Komponenten-Spritzgießen ausgelegt.

Davon ausgehend liegt der Erfindung die Aufgabe zugrunde, ein Werkzeug zum vollautomatischen Mehrkomponenten-Kunststoff-Spritzgießen, insbesondere 2-Komponenten-Spritzgießen, von ein Gewinde, insbesondere Innengewinde, aufweisenden Formteilen zu schaffen.

Die technische Lösung ist gekennzeichnet durch die Merkmale im Kennzeichen des Anspruchs 1.

Dadurch ist ein Werkzeug geschaffen, mit dem vollautomatisch mehrkomponentige Formteile gespritzt werden können, welche mit einem Gewinde versehen sind. Insbesondere ist die Entnahme der fertig gespritzten Formteile aus dem Werkzeug nach dem Spritzvorgang vereinfacht. Die Grundidee besteht darin, daß die Gewindekerne des Werkzeugs mittels der Zahnstange gedreht werden, so daß die Gewindekeme aus dem Gewinde des Formteils herausgeschraubt werden. Hierfür ist eine entsprechende Verschiebeeinrichtung mit der Zahnstange gekuppelt. Anschließend werden die fertig gespritzten Formteile ausgestoßen und das Wendeteil wieder in die Ausgangsposition zurückgedreht. Zu diesem Zweck ist der Mitnehmer der Verschiebeeinrichtung von der Zahnstange entkoppelt. Da aber die Gewindekeme wieder in die eingedrehte Stellung zurückbewegt werden müssen, wird der Mitnehmer der Verschiebeeinrichtung erneut mit der Zahnstange gekuppelt, so daß diese in die entgegengesetzte Richtung verschoben werden kann. Somit ist insgesamt ein vollautomatischer, kontinuierlicher Ablauf gewährleistet, um Formteile, welche ein Gewinde aufweisen, mit mehreren Komponenten zu spritzen.

Die Weiterbildung gemäß Anspruch 2 hat die technische Wirkung, daß das Formteil in einer Längsbewegung aus dem Drehkem herausgedreht wird, während die alternative Weiterbildung in Anspruch 3 das Formteil feststehen läßt, während sich der Drehkern nicht nur bewegt, sondern auch eine Längsbewegung aus dem Formteil heraus durchführt. Die letztgenannte Variante in Anspruch 3 hat den Vorteil, daß sie insbesondere bei Wendewerkzeugen zum Mehrkomponentenspritzgießen eingesetzt werden kann.

Eine Weiterbildung der Variante in Anspruch 3 schlagen die Merkmale des Anspruchs 4 vor. Indem das Gewindeteil in der Art einer Hülse auf einem Kern, nämlich einer runden Stange angeordnet ist, ist dadurch nicht nur eine Drehbewegung des Gewindeteils möglich, sondern auch eine einfache Längsverschiebbarkeit des Gewindeteils auf dieser Stange.

Um das gespritzte Formteil optimal handhaben zu können, schlägt der Anspruch 5 eine dem Formteil zugeordnete Halte- und Auswerfeeinrichtung vor.

Die Weiterbildung gemäß Anspruch 6 schlägt vor, daß die Verschiebeeinrichtung eine Zylinder/Kolben-Einheit ist. Dabei ist der Mitnehmer am Kolben dieser Einheit angeordnet. Eine derartige Zylinder/Kolben-Einheit läßt sich auf einfache Weise pneumatisch oder hydraulisch steuern.

Die Weiterbildungen der Ansprüche 7 und 8 schließlich schlagen bevorzugte Anordnungen der Zahnstangen und der Verschiebeeinrichtungen vor. Die Anordnung der Zahnstangen im Wendeteil hat den Vorteil, daß sie unmittelbar den Gewindekemen zugeordnet sind. Die Anordnung der Verschiebeeinrichtungen in einem der beiden Werkzeughälften, insbesondere in der feststehenden Werkzeughälfte hat den Vorteil, daß dadurch die Handhabung vereinfacht ist. Beim Schließen des Werkzeugs kuppelt dabei der Mitnehmer der Zylinder/Kolben-Einheit mit dem entsprechenden Gegenelement der Zahnstange.

Ein Ausführungsbeispiel eines erfindungsgemäßen Werkzeugs zum Kunststoff-Spritzgießen von ein Innengewinde aufweisenden Formteilen in Form von Kugelschreiberhülsen mit zwei Komponenten wird nachfolgend anhand der Zeichnungen beschrieben. In diesen zeigt:
- Fig. 1: eine Querschnittsdarstellung durch das Werkzeug im geschlossenen Zustand;
- Fig. 2: einen zu Fig. 1 senkrechten Schnitt durch das Werkzeug im Bereich der Zahnstange;

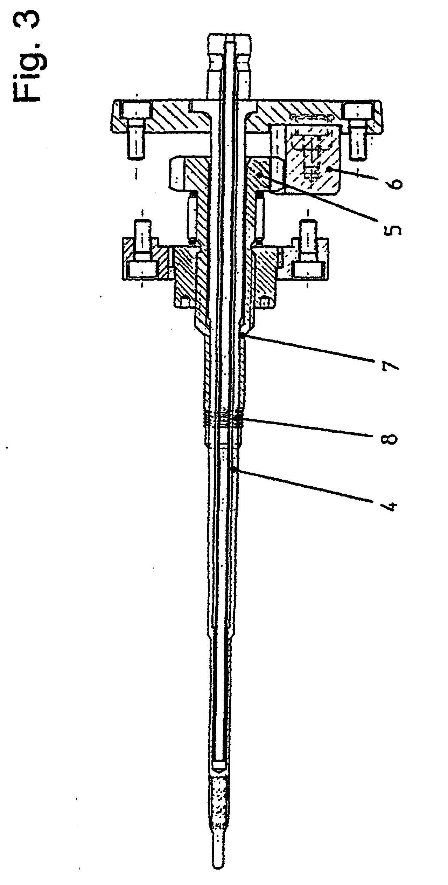

- Fig. 3: einen Detailausschnitt aus Fig. 1 im Bereich des Spritzgießkerns mit dem Gewindekern;
- Fig. 4: einen Ausschnitt aus dem Werkzeug in Fig. 1 im geöffneten Zustand.

Bei dem Werkzeug handelt es sich um ein 16+16-fach Spritzgießwerkzeug zum 2-Komponenten-Spritzgießen von Formteilen 1 in Form von Kugelschreiberhülsen. Das Werkzeug weist zwei Werkzeughälften 2, 2' auf, welche offen- und schließbar sind. Zwischen den beiden Werkzeughälften 2, 2' befindet sich ein sogenanntes Wendeteil 3, welches außer einer Linearbewegung in Richtung der Bewegungsrichtung der beiden Werkzeughälften 2, 2' auch eine Rotationsbewegung um eine Mittelachse des Werkzeugs durchführen kann.

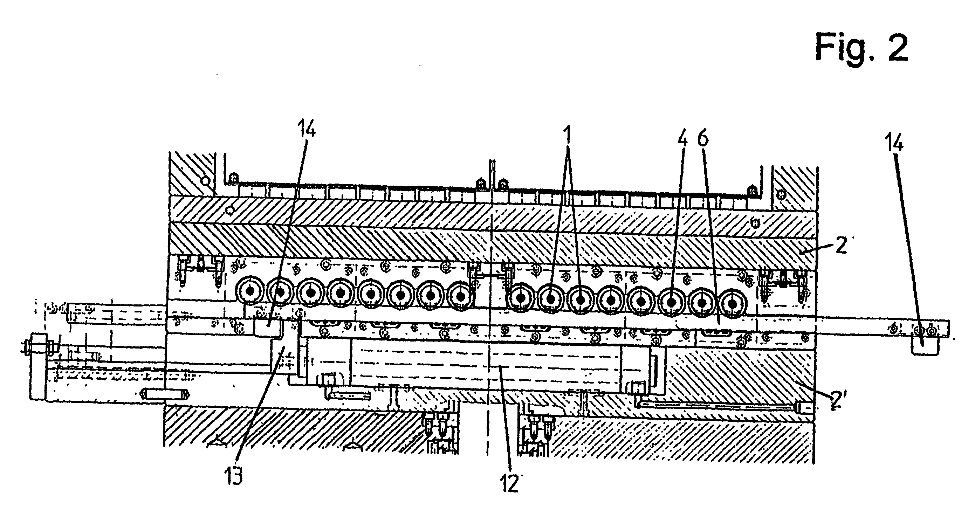

In dem Wendeteil 3 ist ein stangenförmiger Kern 4 fest angeordnet, welcher aus dem Wendeteil 3 nach außen ragt. Dabei sind an den beiden zueinander parallelen Längsseiten des Wendeteils 3 jeweils 16 parallel zueinander ausgerichtete Kerne 4 angeordnet. Auf jedem der Kerne 4 ist ein hülsenartiges Zahnrad 5 nicht nur frei drehbar, sondern auch axial verschiebbar gelagert. Wie insbesondere der Fig. 2 entnehmbar ist, ist ein für sämtliche Zahnräder 5 gemeinsames Antriebszahnelement in Form einer Zahnstange 6 vorgesehen. Diese ist mittels eines entsprechenden Antriebs längsverschiebbar. Am vorderen Ende weist eine Hülse 7 des Zahnrads 5 einen Gewindekern 8 auf.

In der Werkzeughälfte 2' befinden sich zwei Verschiebeeinrichtungen 12 in Form von Zylinder/Kolben-Einheiten, und zwar ist jeder der beiden Zahnstangen 6 jeweils eine derartige Zylinder/Kolben-Einheit zugeordnet. Die Kolben dieser Zylinder/Kolben-Einheiten sind dabei längs der Zahnstangen 6 verfahrbar und weisen am vorderen Ende jeweils einen Mitnehmer 13 auf. Korrespondierend zu diesem Mitnehmer 13 weist die Zahnstange 6 an ihren beiden Enden jeweils ein Gegenelement 14 auf. Wie weiter unten noch auszuführen sein wird, kann der Mitnehmer 13 der Zylinder/Kolben-Einheit mit dem entsprechenden Gegenelement 14 der Zahnstange 6 in Eingriff gebracht werden.

Schließlich weist das Werkzeug noch eine Halte- und Auswerfeinrichtung 9 für die gespritzten Formteile 1 auf.

### Das Werkzeug funktioniert wie folgt:

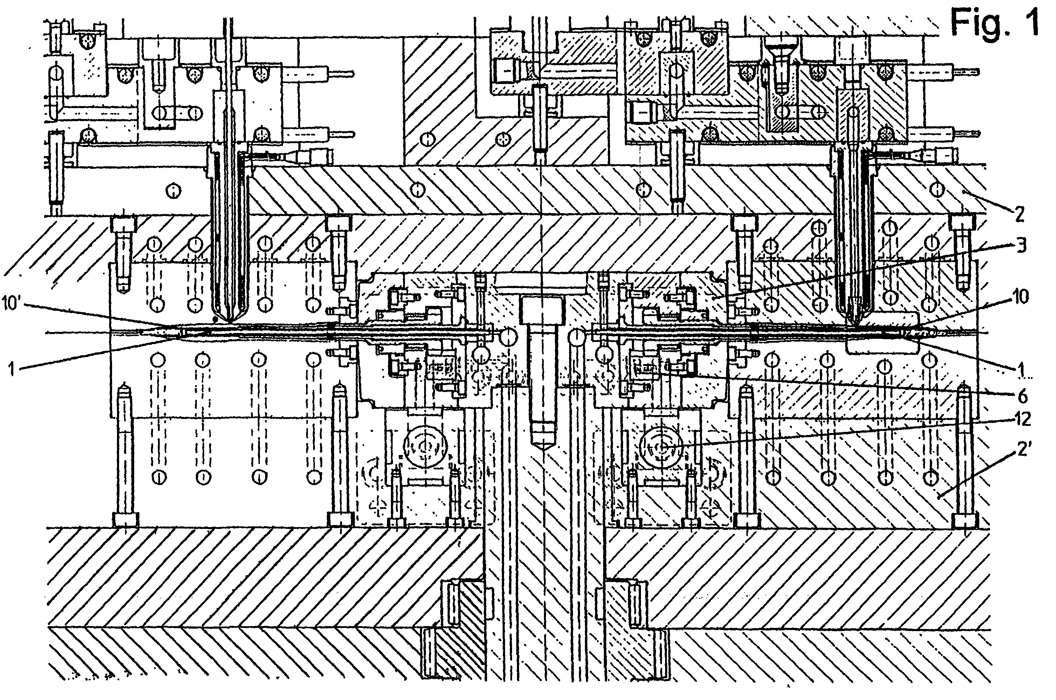

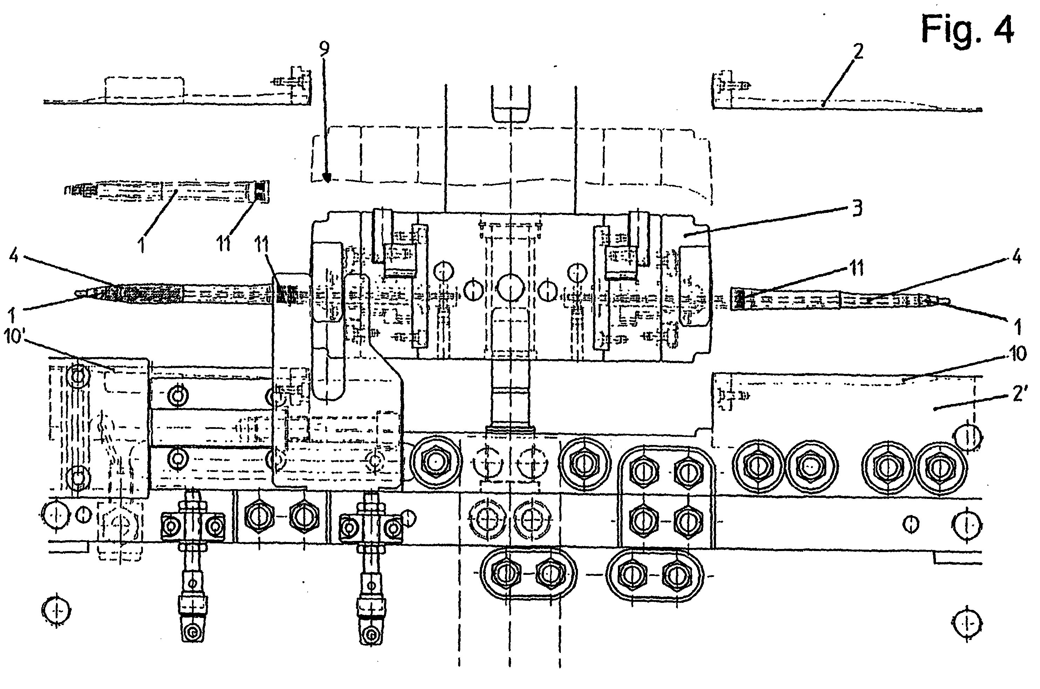

Im geschlossenen Zustand der beiden Werkzeughälften 2, 2' des Werkzeugs bilden diese zwischen sich zwei Arten von Formenhohlräumen 10, 10' entsprechend den beiden zu spritzenden Komponenten. In den Fig. 1 und 4 möge in der rechten Hälfte des Werkzeugs die erste Komponente gespritzt werden. Auf den Gewindekemen 8 der Kerne 4 wird dabei ein Gewinde 11 in Form eines Innengewindes für die Formteile 1 ausgebildet. In der linken Hälfte des Werkzeugs wird dann die zweite Komponente gespritzt.

Nach dem Spritzen der ersten Komponente werden die halbfertigen Formteile 1 in die zweiten Formenhohlräume 10' übergeführt. Zu diesem Zweck werden die beiden Werkzeughälften 2, 2' auseinandergefahren, d.h. das Werkzeug geöffnet. Außerdem wird das Wendeteil 3 ebenfalls ausgefahren und um 180° gedreht. Anschließend wird das Wendeteil 3 wieder zurückgefahren und die beiden Werkzeughälften 2, 2' geschlossen. In der in den Fig. 1 und 4 dargestellten linken Hälfte des Werkzeugs wird dann die zweite Komponente gespritzt. Die Formteile 1 sind somit fertig gespritzt.

Zur Entnahme der fertig gespritzten Formteile 1 werden zunächst die beiden Werkzeughälften 2, 2' des Werkzeugs geöffnet. Durch Verschieben der entsprechenden Zahnstange 6, indem der Kolben der Zylinder/Kolben-Einheit mit seinem Mitnehmer 13 das Gegenelement 14 und damit die Zahnstange 6 vorwärtsbewegt, werden die Zahnräder 5 und damit die Gewindekeme 8 gedreht, so daß die Gewindekerne 8 aus den Formteilen 1 herausgeschraubt werden. Dabei werden die Formteile 1 gehalten. Außerdem bewegen sich die Hülsen 7 mit den Zahnrädern 5 und den Gewindekemen 8 längs der Kerne 4 von den Formteilen 1 weg.

Anschließend wird das Wendeteil 3 in den Bereich zwischen den beiden Werkzeughälften 2, 2' ausgefahren und um 180° gewendet. Diese Position ist in Fig. 4 dargestellt. Danach wird das Wendeteil 3 weiter ausgefahren, bis es mittels seiner Halte- und Auswerfeinrichtung 9 die Abstreifposition erreicht hat. Die fertig gespritzten Formteile 1 werden abgestreift und fallen aus dem Werkzeug heraus, beispielsweise auf ein getaktetes Förderband. Anschließend wird das Wendeteil 3 wieder zurückgefahren.

Die Gewindekerne 6, von denen die fertig gespritzten Formteile 1 abgestreift worden sind und welche sich nunmehr wieder in der Position zum Spritzen der ersten Komponente für den Vorspritzling befinden, befinden sich noch in der "ausgeschraubten" Position. Zum Spritzen der ersten Komponente müssen sie jedoch wieder in die "eingeschraubte" Position übergeführt werden. Zu diesem Zweck muß die zugehörige Zahnstange 6 wieder zurückgefahren werden. Hierfür kuppelt der Mitnehmer 13 der auf dieser Seite befindlichen Zylinder/Kolben-Einheit beim Zurückfahren des Wendeteils 3 mit dem entsprechenden Gegenelement 14 der Zahnstange 6. Durch Betätigen der Zylinder/Kolben-Einheit wird daher die Zahnstange 6 in die "Einschraubposition" der Gewindekeme 8 verschoben.

Schließlich werden die beiden Werkzeughälften 2, 2' wieder geschlossen und der Vorgang beginnt von neuem.

### Bezugszeichenliste

- 1: Formteil
- 2, 2': Werkzeughälfte
- 3: Wendeteil
- 4: Kern
- 5: Zahnrad
- 6: Zahnstange
- 7: Hülse
- 8: Gewindekern
- 9: Halte- und Auswerfeinrichtung
- 10, 10': Formenhohlräume
- 11: Gewinde
- 12: Verschiebeeinrichtung
- 13: Mitnehmer
- 14: Gegenelement

## Patentansprüche

1. Werkzeug zum Mehrkomponenten-Kunststoff-Spritzgießen, insbesondere Zweikomponenten-Spritzgießen, von ein Gewinde (11), insbesondere Innengewinde, aufweisenden Formteilen (1),
**dadurch gekennzeichnet,**
**daß** zwei öffenbare Werkzeughälften (2,2') vorgesehen sind, zwischen denen zum Spritzen des Formteils (1) Formenhohlräume (10,10') für die Komponenten ausgebildet sind,
**daß** ein drehbares Wendeteil (3) zwischen den beiden Werkzeughälften (2,2') vorgesehen ist, an dem wenigstens ein in die Formenhohlräume (10,10') ragender Gewindekem (8) angeordnet ist,
**daß** der Gewindekern (8) derart um seine Längsachse drehbar ist, daß er aus dem gespritzten Gewinde (11) des Formteils (1) herausschraubbar ist,
**daß** der Gewindekern (8) hierzu ein konzentrisch angeordnetes Zahnrad (5) aufweist, mit welchem eine längsverschiebbare Zahnstange (6) kämmt,
**daß** den Formenhohlräumen (10,10') jeweils eine Verschiebeeinrichtung (12) mit jeweils einem Mitnehmer (13) für die Zahnstangen (6) zugeordnet ist und
**daß** die Zahnstangen (6) an ihren beiden Enden jeweils ein Gegenelement (14) zu dem damit kuppelbaren Mitnehmer (13) der zugeordneten Verschiebeeinrichtung (12) derart aufweisen,
**daß** nach dem Herausdrehen des Gewindekerns (8) aus dem fertig gespritzten Formteil (1) durch Verschieben der Zahnstange (6) mittels einer ersten Verschiebeeinrichtung (12) und nach dem Entkuppeln des Mitnehmers (13) dieser ersten Verschiebeeinrichtung (12) sowie Drehen des Wendeteils (3) zum Spritzen der ersten Komponente eines neuen Formteils (1) die Zahnstange (6) nach erneutem Kuppeln des Mitnehmers (13) mittels einer zweiten Verschiebeeinrichtung (12) wieder zurückbewegt und somit der Gewindekern (8) in die eingeschraubte Stellung zurückgeführt wird.

2. Werkzeug nach Anspruch 1,
**dadurch gekennzeichnet,**
**daß** der Gewindekern (8) beim Drehvorgang in dessen Achsrichtung gesehen feststehend ist und
**daß** das Formteil (1) bei dieser Drehbewegung in Achsrichtung verschiebbar ist.

3. Werkzeug nach Anspruch 1,
**dadurch gekennzeichnet,**
**daß** das Formteil (1) beim Drehvorgang in dessen Achsrichtung gesehen feststehend ist und
**daß** der Gewindekern (8) bei diesem Drehvorgang in Achsrichtung verschiebbar ist.

4. Werkzeug nach Anspruch 3,
**dadurch gekennzeichnet,**
**daß** der Gewindekern (8) auf einem fest angeordneten Kern (4) verschiebbar angeordnet ist.

5. Werkzeug nach einem der vorhergehenden Ansprüche,
**dadurch gekennzeichnet,**
**daß** dem Formteil (1) eine Halte- und Auswerfeinrichtung (9) zugeordnet ist.

6. Werkzeug nach einem der vorhergehenden Ansprüche,
**dadurch gekennzeichnet,**
**daß** die Verschiebeeinrichtung (12) eine Zylinder/Kolben-Einheit ist, wobei am Kolben der Mitnehmer (13) angeordnet ist.

7. Werkzeug nach einem der vorhergehenden Ansprüche,
**dadurch gekennzeichnet,**
**daß** die Zahnstangen (6) im Wendeteil (3) angeordnet sind.

8. Werkzeug nach einem der vorhergehenden Ansprüche,
**dadurch gekennzeichnet,**
**daß** die Verschiebeeinrichtungen (12) in einer der beiden Werkzeughälften (2, 2') angeordnet sind.

## Claims

1. Tool for multi-component plastic injection moulding, in particular two- component injection moulding of mouldings (1) having a thread (11), in particular an internal thread,
**characterised in that** two openable tool halves (2, 2') are provided between which, to form the moulding (1), are formed mould cavities (10, 10') for the components,
**in that** between the two tool halves (2, 2') is provided a rotatable turning part (3) on which is arranged at least one threaded core (8) projecting into the mould cavities (10, 10'),
**in that** the threaded core (8) is rotatable about its longitudinal axis such that it can be unscrewed from the moulded thread (11) of the moulding (1),
that for this purpose the threaded core (8) has a concentrically arranged gear wheel (5) which intermeshes with a longitudinally movable toothed rod (6),
**in that** allocated to each mould cavity (10, 10') is a displacement device (12) with a carrier (13) for the toothed rods (6), and
**in that** the toothed rods (6) have at each end a counter-element (14) for the carrier (13) of the allocated displacement device (12), the carrier (13) being connectable to the said counter-element (14) such that after unscrewing the threaded core (8) from the finished moulding (1), by moving the toothed rod (6) by means of a first displacement device (12) and after decoupling the carrier (13) of this first displacement device (12) and rotating the turning part (3), to inject the first components of a new moulding (1) the toothed rod (6) after recoupling of the carrier (13) is moved back again by means of a second displacement device (12) and hence the threaded core (8) returned to the screwed-in position.

2. Tool according to claim 1, **characterised in that** during the rotation process the threaded core (8), viewed in its axial direction, is fixed, and **in that** the moulding (1) is movable in the axial direction during this rotational movement.

3. Tool according to claim, **characterised in that** during the rotation process the moulding (1), viewed in its axial direction, is fixed, and **in that** the threaded core (8) is movable in the axial direction during this rotation process.

4. Tool according to claim 3, **characterised in that** the threaded core (8) is arranged to be movable on a fixed core (4).

5. Tool according to any of the previous claims, **characterised in that** a holding and ejection device (9) is allocated to the moulding (1).

6. Tool according to any of the previous claims, **characterised in that** the displacement device (12) is a cylinder/piston unit where the carrier (13) is arranged on the piston.

7. Tool according to any of the previous claims, **characterised in that** the toothed rods (6) are arranged in the turning part (3).

8. Tool according to any of the previous claims, **characterised in that** the displacement devices (12) are arranged in one of the two tool halves (2, 2').

## Revendications

1. Outil pour le moulage par injection de matière plastique à multi-composants, en particulier pour le moulage par injection à deux composants, de pièces moulées (1) présentant un filetage (11), en particulier un filetage interne,
**caractérisé**
**en ce que** deux moitiés (2, 2') de l'outil qui peuvent s'ouvrir sont prévues, entre lesquelles pour le moulage par injection de la pièce moulée (1) sont formés des espaces creux de moulage (10, 10') pour les composants,
**en ce qu'**une partie tournante rotative (3), sur laquelle est disposé au moins un fond de filet (8) faisant saillie dans les espaces creux de moulage (10, 10'), est prévue entre les deux moitiés de l'outil (2, 2'),
**en ce que** le fond de filet (8) est orientable sur son axe longitudinal de telle façon qu'il peut être dévissé du filetage (11) moulé par injection de la pièce moulée (1),
**en ce que** pour ce faire, le fond de filet (8) présente une roue dentée (5) disposée de façon concentrique avec laquelle engrène une crémaillère (6) mobile dans sa longueur,
**en ce qu'**on attribue à chaque espace creux de moulage (10, 10') un dispositif coulissant (12) muni chacun d'un dispositif d'entraînement (13) pour les crémaillères (6),
et **en ce que** les crémaillères (6) présentent à chacune de leurs deux extrémités un contre-élément (14) au dispositif d'entraînement (13) pouvant s'y accoupler du dispositif coulissant (12) qui lui est attribué,
de telle façon que lorsque le fond de filet (8) est dévissé de la pièce moulée finie (1) par coulissage de la crémaillère (6) grâce à un premier dispositif coulissant (12), et après le découplage du dispositif d'entraînement (13) de ce premier dispositif coulissant (12) et après rotation de la partie tournante (3) pour le moulage par injection des premiers composants d'une nouvelle pièce moulée (1), la crémaillère (6), après nouvel accouplement du dispositif d'entraînement (13), est remise en place à l'aide d'un deuxième dispositif coulissant (12) et le fond de filet (8) est ainsi ré-introduit en position vissée.

2. Outil selon la revendication 1,
**caractérisé**
**en ce que** lors de la rotation, le fond de filet (8) est fixe par rapport à l'axe de rotation et
**en ce que** la pièce moulée (1) lors de ce mouvement de rotation est déplaçable dans le sens de l'axe.

3. Outil selon la revendication 1,
**caractérisé en ce que**
lors de la rotation, la pièce moulée (1) est fixe par rapport à l'axe de rotation et
le fond de filet (8) lors de cette rotation est déplaçable dans le sens de l'axe.

4. Outil selon la revendication 3,
**caractérisé en ce que**
le fond de filet (8) est disposé de façon mobile sur un noyau fixe (4).

5. Outil selon l'une quelconque des revendications précédentes,
**caractérisé en ce**
**qu'**on attribue à l'élément moulé (1) un dispositif d'arrêt et d'éjection (9).

6. Outil selon l'une quelconque des revendications précédentes,
**caractérisé en ce que**
le dispositif coulissant (12) est une unité cylindre/piston, le dispositif d'entraînement (13) étant disposé sur le piston.

7. Outil selon l'une quelconque des revendications précédentes,
**caractérisé en ce que**
les crémaillères (6) sont disposées dans la partie tournante (3).

8. Outil selon l'une quelconque des revendications précédentes,
**caractérisé en ce que**
les dispositifs coulissants (12) sont disposés dans l'une des deux moitiés de l'outil (2, 2').
